Europäisches Patentamt

European Patent Office

Office européen des brevets

(19)

(11) Publication number: **0 158 663**
**B1**

## (12) EUROPEAN PATENT SPECIFICATION

(45) Date of publication of patent specification :
25.03.87

(51) Int. Cl.⁴ : **E 06 B   1/60, F 16 B   17/00**

(21) Application number : 84903676.9

(22) Date of filing : 28.09.84

(86) International application number :
**PCT/SE 84/00322**

(87) International publication number :
**WO/8501544 (11.04.85 Gazette 85/09)**

(54) FASTENING DEVICE FOR DOOR OR WINDOW FRAMES.

(30) Priority : 04.10.83 SE 8305429

(43) Date of publication of application :
23.10.85 Bulletin 85/43

(45) Publication of the grant of the patent :
25.03.87 Bulletin 87/13

(84) Designated contracting states :
DE FR GB NL

(56) References cited :
SE-B-   394 719
US-A- 1 565 253

(73) Proprietor : AB ESSVE PRODUKTER
Skalholtsgatan 8
S-163 40 Kista (SE)

(72) Inventor : JÖNSSON, Nils-Arne
Skogslindgatan 44
S-510 54 Brämhult (SE)

(74) Representative : Bjellman, Lennart Olov Henrik et al
DR. LUDWIG BRANN PATENTBYRÄ AB Drottningga-
tan 7 Box 1344
S-751 43 Uppsala (SE)

## Description

The invention relates to a device for the adjustable fastening of door or window frames or the like to fixed elements, including a screw means provided with threads for engagement with the fixed element, a screw head and a sleeve-shaped part provided with threads for engaging with the frame part.

Devices of the type mentioned are already known, e. g. from the Swedish patent No 216 085. In this known fastening means, the threaded screw means has a further thread on to which a sleeve is screwed, the sleeve in turn being provided with an exterior thread for engaging with the frame. The sleeve and screw means can be turned together with the aid of a tool, so that the sleeve will penetrate into the frame and the screw means into the fixed element, and the sleeve can also be turned by itself with the aid of another tool for adjusting the position of the frame in relation to the fixed element.

This known device enables a desired adjustment but necessitates the production of three different threads and the formation of engagement surfaces for two different tools. The production and the preparatory work on erection will consequently be relatively expensive.

The object of the invention is to provide a fastening device of simple construction. This is provided by a device as claimed in claim 1. The sleeve-shaped part is arranged axially displaceable on the screw means so that in a first position it engages with the screw means to accompany the screw means in its turning movement, while in its second position it does not accompany the turning movement of the screw means.

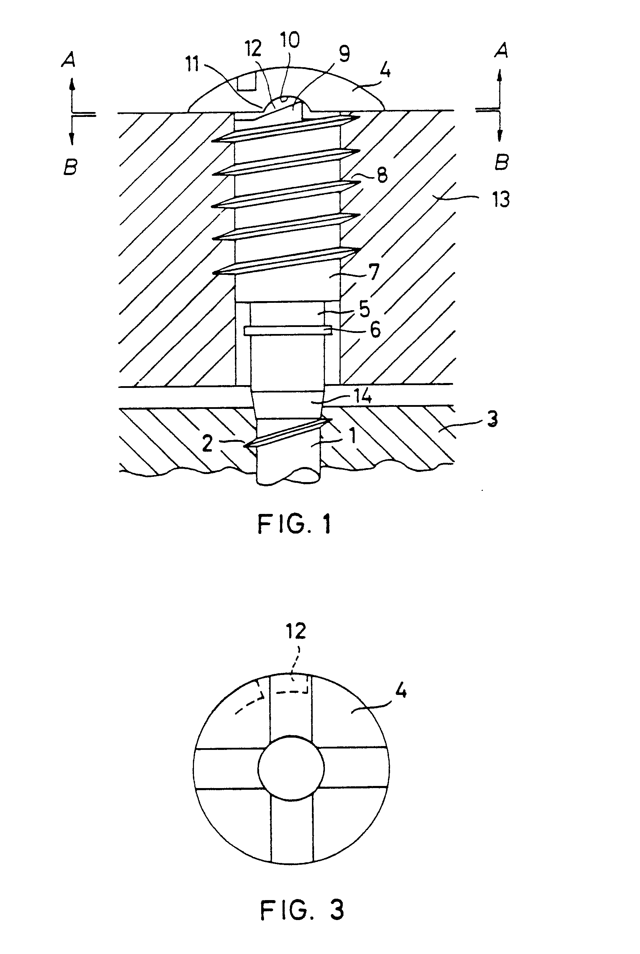

The invention will now be described below with the aid of an embodiment and with reference to the accompanying drawing, on which Figure 1 is a side view of the fastening device with the sleeve part in its engagement position.

Figure 2 illustrates the fastening device partially in section when the sleeve part is not in engagement with the screw means,

Figure 3 illustrates the screw head, seen in the direction of the arrow A and

Figure 4 illustrates the sleeve part in the direction of the arrow B.

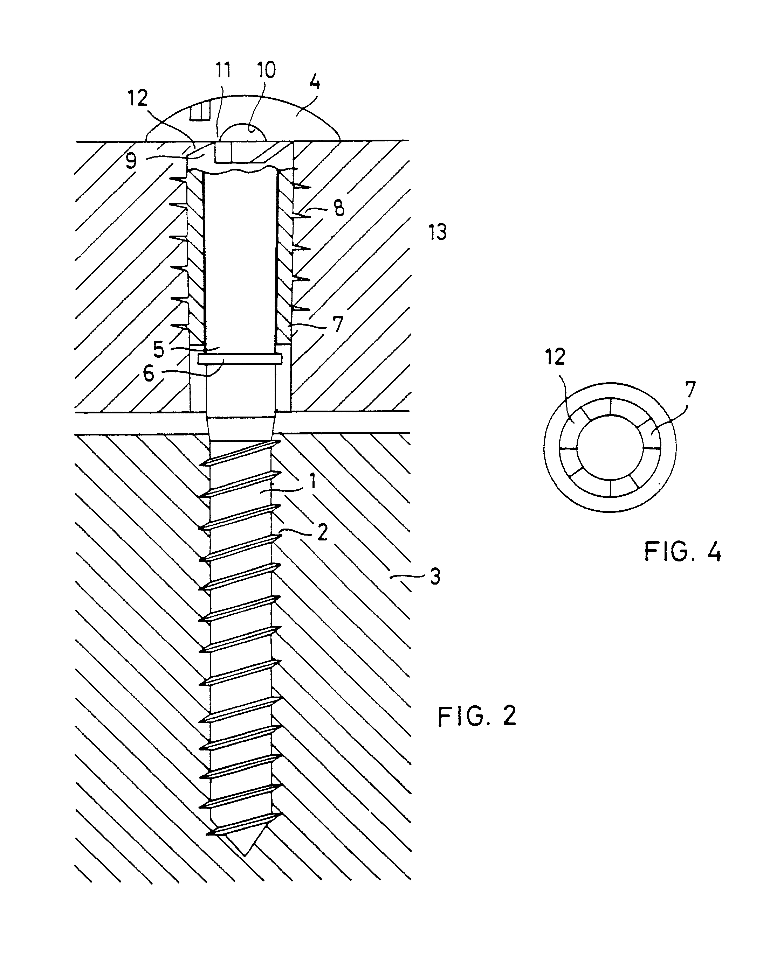

The fastening device according to the invention is illustrated in Figures 1 and 2 in side view and in a partially sectioned side view, respectively. A screw means is denoted by the numeral 1 and is provided with a thread portion 2 for screwing into a fixed element 3, with a screw head 4, with a smooth cylindrical portion 5 between the screw head and a shoulder 6 and with a conical portion 14. On the smooth part 5 there is arranged a sleeve 7 provided with a thread 8, which can be displaced between the shoulder 6 and the screw head 4. The sleeve 7 and the head 4 are implemented at their contiguous surfaces such that when the screw head is turned in one direction, e. g. clockwise, the sleeve is taken with it, whereas if it is turned in the opposite direction the sleeve 7 and head 4 glide against each other. According to one embodiment illustrated on the drawing, the sleeve 7 is provided with projections 9 on its end facing towards the screw head 4. These projections 9 engage in recesses 10 in the screw head and are formed such that on turning the screw head in one direction, e. g. clockwise, the sleeve accompanies the head, while on turning in the other direction the edge 11 of the recess 10 glides along the sloping surface 12 of the projection so that the head 4 is lifted out of engagement with the sleeve part, and the screw means 1 can be turned without the sleeve 7 accompanying it. It is, however, just as possible to have the screw head provided with serrations and the sleeve with recesses having sloping defining surfaces.

When the screw means has been driven in to a depth such that the frame is approximately in the desired position, adjustment takes place by the screw head 4 being turned anticlockwise. The sleeve 7 then does not accompany the screw means 1, but the latter is screwed out until the frame 13 has reached the desired distance from the fixed element. At the places where the distance between the frame and the fixed element is too great, the screw means is driven deeper into the fixed element.

## Claim

Device for adjustable fastening of door or window frames (13) or the like to fixed elements (3), including a screw means (1) provided with a thread (2) for engagement with the fixed element (3), a screw head (4) and a sleeve (7) provided with a thread (8) for engagement with the frame part (13), characterized in that the sleeve (7) is arranged axially displaceable on the screw means (1) between the screw head (4) and a shoulder (6) on the screw means (1), the sides facing each other of the sleeve (7) and of the screw head (4) being provided with projections (9) and recesses (10), respectively, or vice versa which on turning the screw head (4) in one direction by engaging each other drive the sleeve (7), so that it can be screwed into the frame portion, whereas on turning in the opposite direction the recesses and the projections glide over sloping surfaces out of engagement with each other so that the screw means (1) can be freely turned in relation to the sleeve (7).

## Patentanspruch

Vorrichtung für die einstellbare Befestigung von Tür- oder Fensterrahmen (13) oder dergleichen an ortsfesten Elementen (3), beinhaltend ein Schraubmittel (1), das mit einem Gewinde (2) zum Eingriff mit dem ortsfesten Element (3), einem Schraubenkopf (4) und einer Hülse (7) versehen ist, die mit einem Gewinde (8) zum Eingriff mit dem Rahmenteil (13) versehen ist, dadurch gekennzeichnet, daß die Hülse (7) axial verlagerbar auf dem Schraubmittel (1) zwischen dem Schraubenkopf (4) und einer Schulter (6) auf dem Schraubmittel (1) angeordnet ist, wobei die einander gegenüberliegenden Seiten der Hülse (7) und des Schraubenkopfes (4) respektive mit Vorsprüngen (9) und Ausnehmungen (10), oder umgekehrt, versehen sind, die beim Drehen des Schraubenkopfes (4) in einer Richtung durch Ineinandereingreifen die Hülse (7) antreiben, so daß sie in das Rahmenstück geschraubt werden kann, während beim Drehen in entgegengesetzte Richtung die Ausnehmungen und die Vorsprünge über schräge Flächen außer Eingriff miteinander gleiten, so daß das Schraubmittel (1) frei im Verhältnis zu der Hülse (7) gedreht werden kann.

**Revendication**

Dispositif pour la fixation réglable de châssis (13) de porte ou fenêtre ou analogue à des éléments fixes (3), comprenant une vis (1) comportant un filetage (2) pour engagement avec l'élément fixe (3), une tête de vis (4) et un manchon (7) pourvu d'un filetage (8) pour engagement avec le châssis (13), caractérisé en ce que le manchon (7) est monté de façon axialement déplaçable sur la vis (1), entre la tête de vis (4) et un épaulement (6) ménagé sur la vis (1), les côtés du manchon (7) et de la tête de vis (4) tournés l'un vers l'autre comportant des protubérances (9) et des logements (10), respectivement, ou inversement, qui entraînent le manchon (7) par engagement mutuel lorsqu'on tourne la tête de vis (4) dans une première direction, de sorte que le manchon peut être vissé dans le châssis, tandis que lorsqu'on tourne la tête de vis dans la direction opposée, les logements et les protubérances glissent sur des surfaces inclinées et se dégagent les uns des autres de sorte qu'on peut tourner librement la vis (1) par rapport au manchon (7).

FIG. 1

FIG. 3

FIG. 2

FIG. 4